Europäisches Patentamt

European Patent Office

Office européen des brevets

(19)

(11) Veröffentlichungsnummer: **0 421 152 A1**

(12) **EUROPÄISCHE PATENTANMELDUNG**

(21) Anmeldenummer: 90117420.1

(22) Anmeldetag: **10.09.90**

(51) Int. Cl.5: **D01H 15/013**

(30) Priorität: 03.10.89 CH 3598/89

(43) Veröffentlichungstag der Anmeldung:
**10.04.91 Patentblatt 91/15**

(84) Benannte Vertragsstaaten:
**DE ES IT**

(71) Anmelder: **MASCHINENFABRIK RIETER AG**
CH-8406 Winterthur(CH)

(72) Erfinder: **Slavik, Walter**
**Stadacherstrasse 48**
**CH-8320 Fehraltorf(CH)**
Erfinder: **Citterio, Giorgio**
**Gstaldenstrasse 15**
**CH-8810 Horgen(CH)**

(54) **Steuerbare Bewegungssysteme für Bedienungsroboter.**

(57) In einem Bedienungsroboter mit einem lagegeregelten Motor (173) reagiert ein Ist-Wertgeber (D) für das Lageregelsystem auf Bewegungen eines Teils (172) ohne Bezug auf einen vorbestimmten Referenzpunkt. Zur Bestimmung eines Referenzpunktes des zu bewegenden Teils (172) sind separat Mittel vorgesehen, beispielsweise ein Sensor (200). Das System ermöglicht die Anwendung eines Punkt-zu-Punkt-Reglers (H), für den Motor (173), der ausgehend von den Ausgangssignalen eines Encoders (E) das Teil (172), beispielsweise einen Roboterarm, um einen vorgegebenen Winkel drehen kann.

Fig. 1

EP 0 421 152 A1

## STEUERBARE BEWEGUNGSSYSTEME FÜR BEDIENUNGSROBOTER.

Diese Erfindung bezieht sich auf steuerbare Bewegungssysteme und stellt eine Weiterentwicklung der in unseren früheren Objekt Nr. 774 und Nr. 904 aufgeführten Erfindungsgedanken dar.

Der Textilmaschinenindustrie im allgemeinen und der Spinnereimaschinenindustrie insbesondere, wird die Aufgabe gestellt, geeignete Geräte, Vorrichtungen, Maschinen und Systeme zur Verfügung zu stellen, um die Automatisierung des zutreffenden Verfahrens (des Spinnverfahrens) möglichst bald zu erreichen. Dabei werden viele und mindestens zum Teil widersprechende Anforderungen an diese Geräte usw. gestellt.

Da ein zunehmender Personalmangel und insbesondere fehlende Fachkräfte ein Grund für die Automatisierung ist, müssen die neuen Geräte usw. betriebssicher und wartungsarm sein. Da aber auch Unabhängigkeit von Personal nur durch höhere Kapitalkosten erkauft werden kann, ist der Maschinenkonstrukteur gezwungen, kostengünstige Lösungen zu suchen.

In einem ersten Aspekt bezieht sich diese Erfindung auf den Motor zum Bewegen eines Bedienungsroboters bzw. eines bewegbaren Teiles eines solchen Roboters.

Dementsprechend sieht die Erfindung einen Bedienungsroboter vor, der gegenüber der zu bedienenden Maschine bewegbar ist und/oder Teile umfasst, die während einer Bedienungsoperation gegenüber einem Gestell des Roboters bewegt werden müssen. Der Roboter umfasst dementsprechend mindestens einen Motor, der zur Erzeugung von vorgegebenen Bewegungen (sei es vom Roboter selber oder von einem Roboterteil) vorgesehen ist. Die Erfindung ist dadurch gekennzeichnet, dass dieser Motor ein bürstenloser Gleichstrommotor ist. In einem solchen Motor werden Sensoren vorgesehen, um die Position von einem Motorteil (vom Rotor) gegenüber einem anderen Teil (dem Stator) festzustellen, sodass das elektromagnetische Feldsystem des Motors in Abhängigkeit von dieser relativen Position gesteuert werden kann. Dieses Vorgehen wird nachfolgend als "elektronische Kommutierung" bezeichnet.

Vorzugsweise wird der bürstenlose Gleichstrommotor in Kombination mit einer Lageregulierung verwendet, wonach ein geeignetes Steuerungssystem kontinuierlich oder pseudokontinuierlich, während eines Bewegungsablaufes die Ist-Position des zu bewegenden Teiles bzw. Gerätes, feststellt, mit einer geeigneten Soll-Position vergleicht und den oben genannten Motor dementsprechend steuert, um allfällige Abweichungen zwischen dem Soll-Wert und dem Ist-Wert zu korrigieren. Ein bestimmter Bewegungsablauf kann dementsprechend als eine Reihenfolge von Soll-Werten vorprogrammiert werden.

Gemäss einem weiteren erfinderischen Merkmal, ist die Kombination einer solchen Lageregulierung mit einem bürstenlosen Gleichstrommotor dadurch gekennzeichnet, dass der Positions-Ist-Wert aus einem mit dem drehbaren Teil des Motors gekoppelten Encoder gewonnen ist und die Ist-Wertsignale sowohl für die Lageregulierung als auch für die elektronische Kommutierung des Motors ausgewertet werden.

Der bürstenlose Gleichstrommotor ist zwar teuer, was seinen Einsatz ausserhalb spezieller Anwendungen bislang eingeschränkt hat. Wie die Erfinder aber erkannt haben, ist dieser (gravierende) Nachteil durch die Vorteile des bürstenlosen Gleichstrommotors in bezug auf Betriebssicherheit und wartungsarmer Lebensdauer für Bedienungsroboter der Textilmaschinenindustrie mehr als ausgeglichen. Dies gilt insbesondere für Bedienungsroboter mit einigen Motoren relativ kleiner Dimensionen, bei engen Platzverhältnissen und erschwertem Zugang zum einzelnen Motor. Gleichzeitig bringt der bürstenlose Gleichstrommotor die Vorteile der guten "Steuerbarkeit", was Drehzahl und Drehmoment anbetrifft. Für den Bedienungsroboter drücken sich diese Vorteile in der Reproduzierbarkeit der gewünschten Bewegungen aus.

In einem zweiten Aspekt bezieht sich die Erfindung auf die Gewinnung von Ist-Wertsignalen in einem eine Lageregulierung beinhaltenden Bewegungssystem für einen Bedienungsroboter der Textilmaschinenindustrie.

Die Lageregulierung zur Bestimmung von Bewegungsabläufen ist in der Werkzeugmaschinenindustrie seit einiger Zeit eingeführt worden. In solchen Anwendungen ist ein Ist-Wertsignalgeber mit dem zu bewegenden Teil gekoppelt und das Ausgangssignal dieses Ist-Wertgebers wird an eine geeignete Auswertung geliefert, um einen die Bewegungen des Teiles erzeugenden Motors steuern zu können. Die Probleme im Zusammenhang mit solchen Systemen liegen in der Anzahl Störfaktoren, welche die Uebertragung der Bewegung zwischen dem Erzeuger (dem Motor) und dem Ist-Wertgeber beeinflussen können. Das Spiel in einem Getriebe stellt hier nur das naheliegendste und oberflächlichste Beispiel dar. Andere Störfaktoren sind, Temperaturänderungen und die Einflüsse von externen Kräften, wie zum Beispiel Belastung, Schwerkraft und Zentrifugalkräfte. Das Plazieren des Ist-Wertgebers möglichst nahe an der Stelle, die gesteuerte Bewegungen ausführen soll, ist für die Werkzeugmaschinenindustrie mit der entsprechenden Anforderung an die Genauigkeit der Bewegungen, zwingend.

Die Lösung der oben genannten Probleme in solchen Systemen führt aber zu sehr komplizierten Regelsystemen mit einigen überlagerten Regelkreisen. Solche Systeme sind teuer in der Konstruktion und in der Herstellung und sie erschweren die Fehlersuche bei einem Defekt, sodass das System nur mit Hilfe von hoch ausgebildetem Personal betrieben werden kann.

Die Verlagerung des Ist-Wertgebers von der zu bewegenden Stelle zum Motor bringt in einem solchen System offensichtlich nur Nachteile, weil sich die Störwirkungen dann zwischen dem Ist-Wertgeber und der kritischen Stelle sich auswirken können, ohne dass das System sie berücksichtigen kann. Dies ist natürlich besonders gravierend, wenn eine kompliziertere Bewegung durch die Kombination von mehreren einfacheren Bewegungen erzeugt werden muss, sodass die Fehler sich summieren.

Ein weiterer Nachteil, welcher der Anwendung solcher Systeme, sowohl in der Werkzeugmaschinenindustrie, wie auch beim Roboterbau anhaftet, liegt in der Struktur des Ist-Wertgebers. Diese Vorrichtungen sind in beiden Anwendungen als "Absolutgeber" konzipiert, welche die Position des zu folgenden Teiles kontinuierlich gegenüber einem vorbestimmten Referenzsystem eindeutig feststellen. Solche Ist-Wertgeber sind aber sehr teuer, sodass die Anwendung mehrerer solcher Geber, um verschiedene Bewegungsabläufe eines Bedienungsroboters zu steuern, für Anwendungen in der Textilmaschinenindustrie nicht in Frage kommt.

Diese Erfindung, im zweiten Aspekt, sieht einen Bedienungsroboter vor, der einen lagegeregelten Motor umfasst, dadurch gekennzeichnet, dass der Ist-Wertgeber für das Lageregelungssystem auf Bewegungen ohne Bezug auf einen vorbestimmten Referenzpunkt für den zu bewegenden Teil reagiert und dass separat Mittel vorgesehen sind, um mindestens einen Referenzpunkt für den zu bewegenden Teil zu bestimmen.

Die Erfindung ermöglicht die Anwendung von relativ einfacheren Punkt-zu-Punkt-Reglern, die bislang keine Anwendung in der Robotertechnik gefunden haben, obwohl sie zum Steuern bzw. Regeln von Bewegungen im allgemeinen wohl bekannt, technisch gut eingeführt und daher kostengünstig sind.

Die Motorwelle kann mit einem Encoder versehen werden, die eine vorbestimmte Anzahl elektrischer Impulse pro Umdrehung der Welle erzeugt. Das Ausgangssignal des Encoders ist als Eingangssignal für einen bekannten Punkt-zu-Punkt-Regler bestens geeignet, das heisst für einen Regler, welcher ausgehend von einer gegebenen Winkelstellung des Rotors diesen Rotor durch einen vorgegebenen Winkel drehen kann, allenfalls mit einem vorgegebenen Geschwindigkeitsprofil. Dieser Regler kann dann die an den Motor abgegebene Leistung steuern, um von einem Hauptprozessor gelieferten Fahraufträge auszuführen.

Das Mittel zur Bestimmung von einem Referenzpunkt für den zu bewegenden Teil ist vorzugsweise derart zur Zusammenarbeit mit dem Hauptprozessor angeordnet, dass der Prozessor imstande ist, jederzeit dem Regler Fahraufträge ausgehend von einem im wesentlichen bekannten Zustand des zu bewegenden Teiles zu erteilen. Dazu ist der Prozessor vorzugsweise jederzeit imstande, den zu bewegenden Teil an den bzw. einen Referenzpunkt über den Regler anfahren zu lassen. Eine solche Referenzierung des Systems wird auf jeden Fall beim Ingangsetzen notwendig sein. Im Prinzip könnte das System dann bis zum nächsten Stillsetzen ohne eine weitere Referenzierung fahren. Vorzugsweise wird aber das System auch während des Betriebes periodisch zu Kontrollzwecken nochmals referenziert.

Das Mittel zur Bestimmung eines Referenzpunktes umfasst eine Vorrichtung, die auf den Zustand des zu bewegenden Teiles reagiert. Diese Vorrichtung kann durch einen Sensor gebildet werden, der ein vorbestimmtes Tastfeld hat und auf das Eindringen des Teils in dieses Feld reagiert, zum Beispiel: eine Lichtschranke, ein Endschalter oder ein magnetisches Element.

Der Prozessor kann zur Steuerung von mehreren Punkt-zu-Punkt-Reglern angeordnet werden und auf diese Weise die Bewegungen von verschiedenen Teilen des Roboters koordinieren.

Wo der Bedienungsroboter zur Bedienung von Textilmaschinen vorgesehen ist, kann der Ist-Wertgeber mit Vorteil unmittelbar mit der Welle des Antriebsmotors gekoppelt werden, sodass die Einflüsse von Störfaktoren (zum Beispiel Getriebespiel) zwischen dem Motor und dem Ist-Wertgeber ausgeschaltet werden. Die vom Ist-Wertgeber abgegebene Signale entsprechen daher nicht genau den Bewegungen des vom Motor bewegten Teiles, aber die daraus entstehenden Fehler sind für die notwendige Genauigkeit des Bedienungsablaufes in einer Textilmaschine nicht von kritischer Bedeutung.

Die beiden Aspekte der Erfindung werden nun anhand von in den Zeichnungen dargestellten Ausführungsbeispielen näher erläutert.

Es zeigt:

Figur 1 eine schematische Darstellung von einem Bedienungsroboter gemäss unserem Objekt Nr. 904, (schweiz. Patentanmeldung Nr. 1239/89, vom 4. April 1989, "Andockgerät"), wobei Figur 1A ein Detail des Roboters zu einem grösseren Massstab darstellt und Figur 1B weitere Einzelheiten dieses Details zeigt,

Figur 2 ein schematisches Blockdiagramm von einem System gemäss dieser Erfindung zum Bewegen von einem in Figur 1 abgebildeten Teil,

Figur 3 ein Flussdiagramm für einen geeigneten Referenzierungsvorgang,

Figur 4 und 5 verschiedene Anordnungen von Referenzpunktgeber gegenüber den zu bewegenden Teilen,

Figur 6 eine Schaltung zur Speisung der Antriebe mit elektrischer Energie und Figur 6A ein Detail dieser Schaltung.

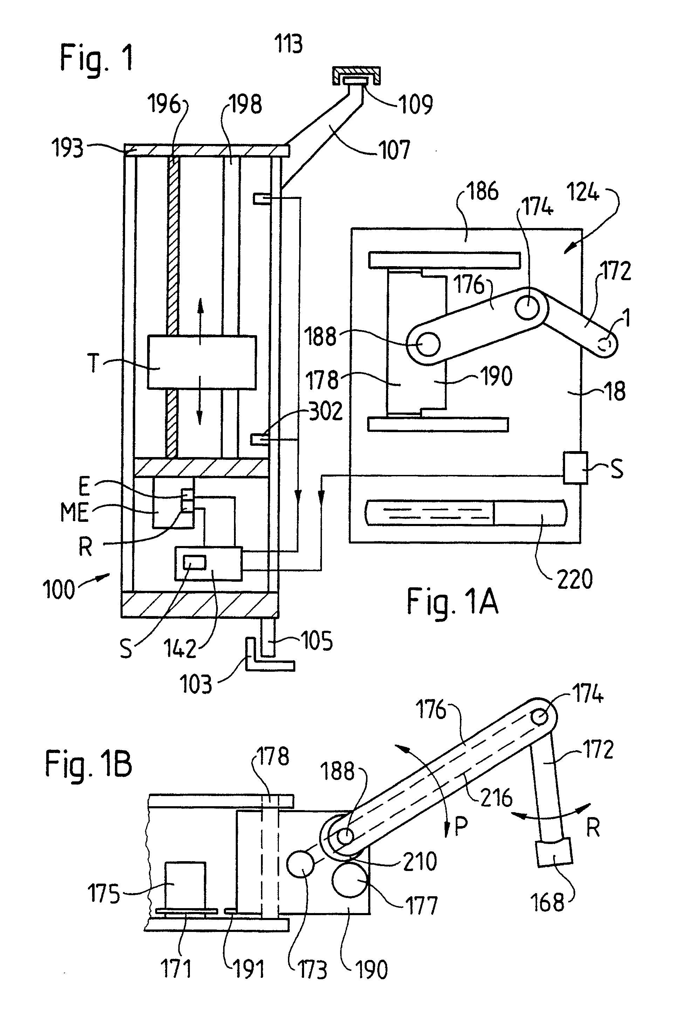

Figur 1 ist eine Kopie von Figur 1 (samt Figur 1A) des früheren Objektes Nr. 904. Vollständigkeitshalber wird die Beschreibung dieser Figur aus dem Objekt Nr. 904 nochmals aufgeführt.

Figur 1 zusammen mit ihrem Detaildiagramm Figur 1A zeigt schematisch einen Bedienungsroboter für eine Ringspinnoder Ringzwirnmaschine. Das Fahrgestell ist mit dem Bezugszeichen 100 angedeutet und läuft auf von einer Führungsschiene 103 geführten Fahrrädern 105 der zu bedienenden Maschine entlang. Das Gestell 100 trägt mindestens einen Stützarm 107 mit einer Führungsrolle 109, die in einer zweiten Führungsschiene 113 läuft und das Gestell 100 in eine vorbestimmte Stellung oder Lage der nicht gezeigten Maschine gegenüber hält. Die beiden Führungsschienen sind am Maschinengestell (nicht gezeigt) befestigt.

Das Fahrgestell 100 trägt eine Führungsstange 198 und eine Gewindespindel 196, die sich beide senkrecht zwischen einer oberen und einer unteren Trägerplatte 193 erstrecken. Die Gewindespindel 196 verläuft auch durch eine Bohrung in einer der Trägerplatten (im gezeigten Beispiel durch die untere Trägerplatte 193) und ist mit der Antriebswelle (nicht gezeigt) einer Motoreinheit ME gekoppelt. Die von der Motoreinheit ME bewirkte Drehung der Gewindespindel 196 um die eigene Längsachse wirkt sich in einer vertikalen Verschiebung von einem Träger T, der von der Gewindespindel 196 getragen und von der Stange 198 geführt wird. Auf den Träger T ist ein Schlitten 186 (Figur 1A) montiert, sodass der Schlitten sich auf und ab mit dem Träger bewegt. Der Schlitten 186 trägt seinerseits gewisse Arbeitselemente, die zur Ausführung von Bedienungsarbeiten an den Spinnstellen der Ringspinnmaschine ausgelegt sind. Zur Klarheit der Darstellung ist der Schlitten 186 zu einem grösseren Massstab neben dem Roboter der Figur 1 gezeigt worden, wobei gewisse Steuerungsverbindungen zwischen dem Schlitten und dem Fahrgestell schematisch angezeigt sind.

Der Schlitten 186 trägt ein Handhabungsgerät 124 und ein Anwickelgerät 150. Da diese Geräte in den schweizerischen Patentanmeldungen Nr. 1121/89 vom 28.03.1989 und Nr. 1122/89 vom 28.03.1989 beschrieben worden sind, werden sie hier nur skizzenhaft gezeigt und erläutert.

Gerät 124 umfasst ein Gehäuse 190, das drehbar um eine senkrechte Achse 178 montiert ist. Die Achse 178 verläuft senkrecht zwischen einer oberen und einer unteren Platte, die beide starr auf einer Trägerplatte 184 montiert sind. Gehäuse 190 trägt zwei Hebel 172, 176, die miteinander über eine Schwenkachse 174 und mit dem Gehäuse 190 über eine Schwenkachse 188 verbunden sind. An seinem freien Ende ist der Hebel 172 mit einer Halterung 168 für ein nicht gezeigtes Fadenführungselement (z.B. einen Mündungsteil von einem Fadenspeicher in der Form eines Saugrohres) versehen. Die Achsen 174, 188, 178 sind je mit einem Servomotor (nicht gezeigt) versehen, welcher von einer Steuerung 142 (Figur 1) im Fahrgestell 100 gesteuert werden kann, um dabei einen Faden gegenüber dem Schlitten 186 zu manipulieren. Beim Fahren des Bedienungsroboters der Maschine entlang sind die Hebel oder Arme 172, 176 des Handhabungsgerätes 124 im Bedienungsroboter zurückgezogen, um Kollisionen mit Maschinenteilen zu vermeiden. Nachdem aber der Bedienungsroboter sich an einer zu bedienenden Spinnstelle positioniert hat, kann der Hebel 172 mit seiner Halterung 168 in die Spinnstelle hinein gestreckt werden, um darin Bedienungsarbeiten auszuführen.

Das Anwickelgerät 150 umfasst einen Trägerzylinder 218, der auf der Schlittenplatte 184 montiert ist und einen Arbeitskopf 220, der nachfolgend etwas näher erläutert werden soll und auf einer im Zylinder 218 verlaufenden Führungsstange 221 montiert ist. Der Arbeitskopf 220 ist beim Fahren des Roboters in einer zurückgezogenen Position (Figur 1A) gehalten, kann aber durch Bewegung der Führungsstange 221 nach rechts, gemäss Figur 1, in einer Spinnstelle zur Ausführung von Bedienungsarbeiten ausgestreckt werden.

Da diese Erfindung sich mit dem Antriebssystem eher als mit dem Aufbau des Roboters befasst, ist der Manipulator 124 in Figur 1B nochmals schematisch dargestellt, aber diesmal in einer Form, welche die Erklärung der Motorenanordnung erleichtert.

Der Schlitten 186 trägt einen Zapfen 178, der senkrecht parallel zur Spindel 198 und Führungsstange 196 steht. Ein Träger 190 sitzt auf dem Zapfen 178 und ist drehbar um die Längsachse des Zapfens angeordnet. Ein Motor 175 sitzt auf dem Schlitten 186 neben dem Träger 190. Die Motorwelle (nicht gezeigt) wird über ein geeignetes Getriebe 171, 191 mit dem Träger 190 derart verbunden, dass die Drehungen der Motorwelle im Betrieb an den Träger zur Drehung vom letzteren um die Längsachse des Zapfen 178 übertragen werden.

Der Träger 190 trägt einen weiteren Zapfen 188, der eine Schwenkachse für einen Manipulatorarm 176 bildet. Ein auf dem Träger 190 angeordneter Motor 177 ist über ein geeignetes Getriebe 210 mit dem Arm 176 verbunden, um den Arm in beiden Richtungen des Doppelpfeils P um den Zapfen 188 zu schwenken.

An seinem Ende vom Träger 190 entfernt ist der Arm 176 auch mit einem Zapfen 174 versehen, der als Schwenkachse für einen zweiten Manipulatorarm 172 dient. Dieser Arm 172 hat ein freies Ende, das mit einer geeigneten Greifvorrichtung 168 (nur schematisch abgebildet) versehen ist. Der Träger 190 trägt auch einen Motor 173, der über ein geeignetes Getriebe mit dem zweiten Manipulatorarm 172 verbunden ist, um diesen Arm in beiden Richtungen des Doppelpfeils R um die Längsachse des Zapfens 174 zu schwenken.

Diese ganze Anordnung ist derart gegenüber einer nicht dargestellten Ringspinnmaschine angeordnet, dass der durch die Arme 172 und 176 gebildete Manipulator zur Ausführung von Bedienungsarbeiten in den einzelnen Spinnstellen der Maschine einführbar ist. Dazu ist der Manipulator über den Schlitten 186 und seinen Antrieb gegenüber der Spinnstelle höhenverstellbar, während der durch die Schwenkachse 178 gebildete Freiheitsgrad die Anführung des Manipulators wahlweise von links oder von rechts in bezug auf eine gegebene Spinnstelle ermöglicht.

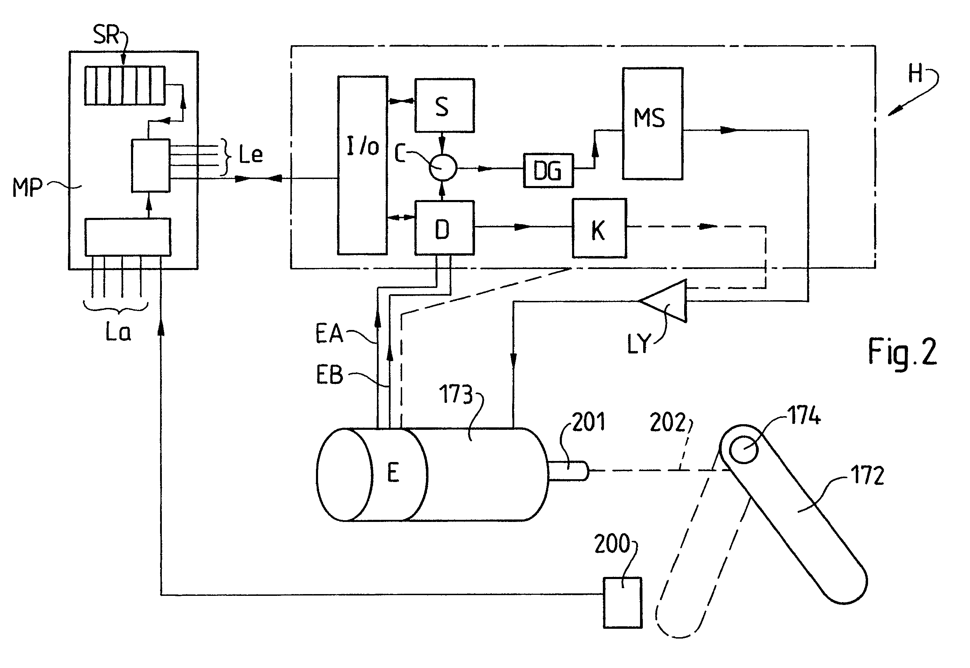

Die Bewegungen der verschiedenen Teile (Schlitten 186, Träger 190, Arm 176 und Arm 172) müssen genau ausgeführt werden, und zwar koordiniert gemäss einem vorbestimmten Ablauf oder Programm, um die erwünschten Bedienungsarbeiten zu ermöglichen. Die Bewegungen der Teile sind direkt von den Motoren 199, 175, 177 und 173 abhängig, und es gilt nun vorerst die Steuerung bzw. Regelung eines einzelnen Teils zu beschreiben und nachher die Koordinierung der Bewegungen untereinander zu erklären. Die Steuerung bzw. Regelung der Bewegung der einzelnen Teile wird nun anhand der Figur 2 behandelt werden, wobei der Teil 172 nur als Beispiel ausgewählt worden ist, da das zutreffende System für alle vier vorerwähnte Teile gleich ist.

Figur 2 zeigt nochmals und immer noch schematisch den Arm 172, Zapfen 174 und Antriebsmotor 173.

Die Motorwelle wird durch das Bezugszeichen 201 angedeutet und die Getriebeverbindung wird schematisch durch die gestrichelte Linie 202 zwischen der Welle 200 und dem Arm 174 angedeutet. Ein Inkremental-Encoder E sitzt fest auf der Welle 201 an seinem Ende vom Arm 172 entfernt. Der Aufbau und Funktion dieser Vorrichtung wird nachfolgend noch näher beschrieben. Der Encoder E gibt zwei Ausgangssignale auf jeweilige Leitungen EA und EB, welche beide mit jeweiligen Eingängen eines für die Lageregulierung geeigneten Prozessors H verbunden sind. Die schematisch abgebildete Regelung H ist ein von der Firma Hewlett-Packard unter der Bezeichnung HCTL-1000 erhältlicher Prozessor, der sowohl für die Lageregulierung als auch für die elektronische Kom-mutierung eines bürstenlosen Gleichstrommotors geeignet ist. Die nachfolgende Beschreibung verschiedener Elemente dieses Prozessors behandelt nur die für diese Erfindung wichtigen Aspekte, ohne in die Einzelheiten dieses käuflichen Produktes einzugehen.

Der Prozessor H umfasst eine Dateneingangsbzw. -ausgangseinheit I-O, eine Ist-Werteinheit D, eine Soll-Werteinheit S, einen Komparator C, einen Digitalfilter DG, eine Motor-Steuerungseinheit MS und eine Kommutierungseinheit K. Die Eingangsbzw. Ausgangseinheit I-O ist zum Signalaustausch sowohl mit einem Haupt-Prozessor MP als auch mit der Soll-Werteinheit S, Ist-Werteinheit D, Kommutierungseinheit K und dem Digitalfilter DG angeordnet. Die Ausgangsignale der Soll-Werteinheit S und Ist-Wert-einheit D werden an den Komparator C geliefert, wo sie miteinander verglichen werden, und ein entsprechendes Abweichungssignal am Ausgang des Komparators C wird zum Eingang des Digitalfilters DG weitergeleitet. Die Filtercharakteristik des Filters DG kann über die Eingangs-/Ausgangseinheit I-O derart an den Gesamtaufbau vom Regelkreis angepasst werden, dass die Stabilität der Regeloperation während des Betriebes gewährleistet wird. Das Ausgangssignal des Filters wird an die Motor-Steuerungseinheit MS geleitet, wo es in eine geeignete Form zur Steuerung des Leistungsverstärkers LV umgesetzt wird.

Die Ist-Werteinheit D erhält an einem Eingang das zweiphasige Ausgangssignal des Encoders E. Die Einheit D ist zur Auswertung des Encodersignals auf seine Positionsinformation, zur Speicherung dieser Information und zur Weitergabe der Positionsinformation an die Einheit I-O, den Komparator C und die Kommutierungseinheit K eingerichtet. Da aber die Kommutierungseinheit K nur unter gewissen Umständen zur Anwendung im Zusammenhang mit dieser Erfindung kommt, wird sie vorerst in der nachfolgenden Beschreibung ausser acht gelassen und erst später bei der Behandlung der Benützung von einem bürstenlosen Gleichstrommotor wieder erwähnt werden. Der "Grund-Regelkreis" umfasst daher den Encoder E, die Ist-Werteinheit D, Komparator C, Digitalfilter DG, die Motor-Steuerungseinheit MS und den Leistungsverstärker LV, wobei der Soll-Wert von der Soll-Werteinheit S in Abhängigkeit von Befehlen des Hauptprozessors MP gegeben wird.

Es ist nun erwünscht, diesen Grund-Regelkreis als Lageregulierung auszunützen, um vorgegebene Bewegungsabläufe des Manipulatorarmes 172 durchzuführen. Um einen vorbestimmten Bewegungsablauf (oder "Fahr-Auftrag") auszuführen, muss das Gesamtsystem inkl. dem Hauptprozessor MP am Anfang des Ablaufes Daten über die "Ausgangsstelle" des Armes 172 innehaben. Weiterhin muss das System während des Ablaufes weitere Daten über die momentane Position und gegebenenfalls über die Bewegungsgeschwindigkeit und möglicherweise sogar über die Beschleunigung des Armes 172 gewinnen. Die notwendige Genauigkeit solcher Daten und die notwendige Kontinuität der Regeloperation hängen im wesentlichen von der Anwendung ab.

Wenn zum Beispiel der Arm 172 ein Werkzeug halten sollte, das mit hoher Präzision einem vorgegebenen Pfad auf einem Werkstück folgen sollte, dann ist es notwendig, mindestens einen Sensor und wahrscheinlich mehrere Sensoren vorzusehen, um die Position des Werkzeuges selber sowie seine Geschwindigkeit gegenüber einem geeigneten Referenzsystem festzustellen. Die Bestimmung der Ist-Werte unter solchen Umständen, mag kontinuierlich (über Analogsignale) oder pseudokontinuierlich durch periodisches Abtasten mit einer sehr hohen Taktfrequenz erfolgen. Ein relativ einfacher und kostengünstiger Regelprozessor, wie zum Beispiel der HCTL-1000, ist nicht in der Lage, solche Signale zu verarbeiten.

Wenn weiterhin das System zur Ausführung von allen möglichen Bewegungskombinationen innerhalb seiner Freiheitsgrade gebaut werden muss, sollte der Arm 172 mit einem Positionssensor in der Form eines "Absolutgebers" versehen werden, welcher die Position des Armes jederzeit eindeutig (aufgrund vom Aufbau des Gebers selber) gegenüber einem vorgegebenen Referenzpunkt bestimmt. Arm 172 könnte zum Beispiel mit einem Ist-Wertgeber versehen werden, der den Drehwinkel des Armes 172 gegenüber einem von der Drehachse des Armes ausgehenden Referenzradius bestimmt. Der relativ einfache Regelprozessor ist aber auch nicht in der Lage, die Ausgangssignale von solchen Ist-Wertgebern auszuwerten.

Der Prozessor H ist vielmehr zur Ausführung von einfachen Punkt-zu-Punkt-Aufträgen eingerichtet und dazu ist er zur Zusammenarbeit mit einem Encoder ausgelegt, welcher für jede Umdrehung der Motorwelle 201 eine vorgegebene Anzahl elektrische Impulse ausgibt. Ein solches Signal sagt nichts über die Position des Armes 172 im Raum aus. Das Signal des Encoders ist aber dazu geeignet, Veränderungen in der Position des Armes 172 anzugeben, sofern die Umdrehungen der Motorwelle 200 durch die Verbindung 202 mit einer vorhersehbarer Genauigkeit weitergegeben werden. Wenn das Encodersignal mit einer genügend hohen Taktfrequenz abgetastet wird, kann auch anhand einer Auswertung des Encodersignals auf die Geschwindigkeit der Veränderung in der Position des Armes 172 geschlossen werden.

In unserem Objekt Nr. 897 (CH-Patentanmeldung Nr. 1121/89, vom 23.03.1989, "Handhabungsgerät zum Garnansetzen") haben wir die Anwendung eines Bedienungsroboters im wesentlichen, wie er in Figur 1 dieser Anmeldung beschrieben worden ist, zur Manipulation eines Fadens während dem Ansetzen bzw. Anspinnen in einer Ringspinnmaschine beschrieben. Die Greifvorrichtung 168 trägt in diesem Fall ein Fadenführungselement (in dieser Anmeldung nicht gezeigt), sodass der zu manipulierende Faden durch das Führungselement gezwungen worden ist, die Bewegungen des Manipulators zu befolgen.

Wie Objekt Nr. 897 zeigt, muss ein Fadenmanipulator bei der Bedienung einer Spinnstelle in einer Ringspinnmaschine einen komplexen Bewegungsablauf ausführen. Dabei ist es aber nicht notwendig, das Fadenführungselement "millimetergenau" gegenüber der Spinnstelle zu bewegen. Für diese Anwendung erreicht man eine ausreichende Genauigkeit mit einem Encoder E (Figur 2), welche direkt auf der Motorwelle 201 sitzt, wenn die Welle 201 selber mit einer geeigneten Verbindung (z.B. einem Synchron-Riemengetriebe) mit dem Arm 172 gekoppelt wird und der Arm selber genügend steif ist, um im Betrieb auftretende Belastungen aufzufangen.

Einen geeigneten Encoder zur Zusammenarbeit mit dem Hewlet-Packard HCTL-1000-Prozessor ist von Hewlet-Packard selber unter die Bezeichnung HEDS-5000 angeboten. Einen solchen Inkremental-Encoder ist zur Abgabe von zwei Impulssignalen mit einer gegenseitigen Phasendifferenz von 90$^\circ$ konstruiert. Diese Signale treten auf jeweilige Leiter EA und EB vom Encoder E (Figur 2) auf. Der Phasenunterschied dieser zwei Signale ermöglicht die Erkennung der Drehrichtung des Motors 173. Die Anzahl Impulse gibt die Positionsveränderung an und die Anzahl Impulse pro Zeiteinheit gibt die Durchschnittsdrehzahl oder Geschwindigkeit dieser Positionsveränderung an. Ein solches System bietet eine sehr kostengünstige Lösung des Problems der Regelung von Bewegungen eines Manipulatorarmes 172. Das verbleibende Problem liegt darin, dass der Prozessor H und der Encoder E von ihrem Aufbau her keinerlei Informationen über die Position des Armes 172 im Raum gewinnen können, das heisst sie umfassen kein eingebautes Referenzsystem für den zu bewegenden Teil.

Nach dem zweiten Aspekt dieser Erfindung wird separat Mittel vorgesehen, um mindestens einen Referenzpunkt für die Bewegungen des Armes 172 zu bestimmen. Im dargestellten Beispiel der Figur 2 besteht dieses Mittel aus einem Sensor 200 und einem geeigneten Softwareprogramm im Hauptprozessor MP. Der Sensor 200 wird an einem geeigneten Punkt im Bewegungsraum des Armes 172 plaziert (dazu geeignete Punkte werden nachfolgend anhand von praktischen Beispielen näher erläutert). Es wird jetzt angenommen, das System sei nach einem Betriebsunterbruch neu in Gang gesetzt worden und besitze deswegen keine "Kenntnisse" der momentanen Position des Armes 172. Es können in diesem Zustand keine eigentlichen Bedienungsbewegungen des Armes 172 ausgeführt werden, ohne das System vorher zu referenzieren. Das im Hauptprozessor MP vorhandene Software enthält aber eine Referenzierungs-Routine, wonach der Arm 172 aus jedem beliebigen Punkt in seinem Bewegungsraum an den Referenziezierungs-Sensor 200 angefahren werden kann. Als erstes gibt daher der Hauptprozessor MP an den Regler H einen Befehl zum Bewegen des Armes in Richtung des Sensors 200, was durch die Soll-Werteinheit S in einem geeigneten Soll-Wert für die Drehgeschwindigkeit und Drehrichtung des Motors 173 umgewandelt wird.

Die Motorwelle 201 wird entsprechend gedreht, bis der Arm 172 zum Beispiel aus der in Figur 2 mit vollen Linien gezeichneten Position in den mit gestrichelten Linien angedeuteten Referenz-Position bewegt worden ist, wo der Arm sich im Tastfeld des Sensors 200 befindet. Der Sensor 200 gibt ein entsprechendes Signal an den Hauptprozessor MP ab, was über eine Dateneingangseinheit I dieses Prozessors an die Zentraleinheit Z des Prozessors weitergegeben wird. Die Zentraleinheit des Hauptprozessors leitet sofort einen Stoppbefehl an den Regler H weiter, was das Anhalten des Armes 172 innerhalb des Tastfeldes vom Sensor 200 bewirken sollte. Der Hauptprozessor MP kann dann entweder über die Einheit I-O die in der Einheit D vorhandenen Positionsdaten abfragen und in einem eigenen Speicherregister SR als Referenzpunkt eintragen oder die Positionsdaten in der Einheit D auf einen vorbestimmten Referenzwert einstellen. Zum Beispiel, wenn die Signale vom Encoder E durch Zählen von Impulsen in der Einheit D ausgewertet werden, kann am Referenzpunkt der Zählerstand auf Null gesetzt werden.

Es wird wohl klar sein, dass alle weiteren Befehle des Hauptprozessors MP von diesem bestimmten Referenzpunkt ausgehen können. Diese Referenzierung genügt unter Umständen, bis der Referenzwert beim Stillsetzen des Systems wieder verloren geht. Das System wird aber mit Vorteil bei Gelegenheit auch innerhalb einer Betriebsperiode gelegentlich zur Kontrolle neu referenziert durch Wiederholung des schon beschriebenen Referenzierungs-Vorganges. Auf diese Weise kann eine Aufsummierung von Fehlern über Zeit vermieden werden. Es können auch durch einen Vergleich zwischen dem eigentlichen Positionswert beim Erreichen des Referenzpunktes während eines Kontrollvorganges mit dem vorher eingetragenen oder eingestellten Referenzwert wesentliche Abweichungen frühzeitig erkannt werden, sodass eine auffällige Wartungsbedürftigkeit des Systems erkannt werden kann.

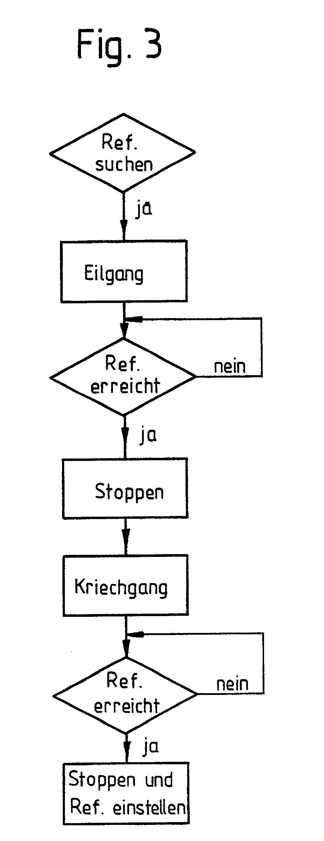

Zur Ausführung des beschriebenen Referenzierungsvorganges gibt es nur eine Voraussetzung, nämlich, dass der Hauptprozessor MP "weiss", wie der Arm 172 aus einer unbekannten Position in Richtung des Referenzierungssensors 200 bewegt werden kann. Dies hängt natürlich vom mechanischen Freiheitsgrad des Systems ab. Wenn diese Voraussetzung erfüllt ist, ist es nur notwendig, die Bewegungsgeschwindigkeit des Armes während der Referenzierung zu bestimmen. Das in Figur 3 gezeigte Flussdiagramm stellt einen etwas komplizierteren Referenzierungsvorgang dar. Danach wird beim Befehl "Referenzposition suchen" der Arm 172 vorerst im Eilgang bewegt, was das Anhalten des Armes 174 mit der notwendigen Genauigkeit innerhalb des Tastfeldes vom Sensor 200 nicht erlaubt, sondern zwangsweise zum Ueberschreiten von der erwünschten Referenzposition führt. Das Eintreten des Armes 172 im Tastfeld des Sensors 200 wird trotzdem vom Sensor festgestellt und sein Ausgangssignal führt über den Prozessor MP zu einem Stoppbefehl. Der Prozessor MP gibt aber dann einen weiteren Suchbefehl an den Regler H, wonach der Referenzpunkt nochmals, aber diesmal im Kriechgang und in der umgekehrten Drehrichtung gegenüber vorher, gesucht wird. Diese niedrigere Bewegungsgeschwindigkeit des Armes 172 ermöglicht das Anhalten des Armes in einer genau vorbestimmten Referenzposition gegenüber dem Sensor 200 und das entsprechende Einstellen bzw. Eintragen von Referenzdaten in den Speichern des Systems.

Der Arm 172 ist zur Erklärung des Prinzips nur als Beispiel ausgewählt worden. In einem komplexeren System wie dem Bedienungsroboter gemäss Figur 1 ist es notwendig, einen Referenzierungsvorgang für jeden zur Ausführung von einer Bedienungsoperation zu bewegenden Teil auszuführen. Diese Referenzierungsvorgänge sollten von einem Hauptprozessor ausgeführt und koordiniert werden und die jeweiligen Referenzwerte sollten in diesem Prozessor eingetragen bzw. von diesem Prozessor bestimmt werden. Dementsprechend sind in Figur 2 weitere Eingänge Le zur Verbindung mit weiteren Referenzsensoren (in Figur 2 nicht gezeigt) und weitere Ausgänge La zur Verbindung mit weiteren Regelprozessoren (nicht gezeigt) vorgesehen.

Figur 2 zeigt schematisch eine "ideale" Anordnung, wonach der Referenzsensor 200 derart plaziert ist, dass er auf die Anwesenheit vom freien Ende des Armes 172 in seinem Tastfeld reagiert, d. h. auf dem Teil des Systems worauf es bei der Durchführung einer Bedienungsoperation eigentlich ankommt. Eine solche Anordnung wäre für einen Manipulator nach Figur 1 tatsächlich möglich, wenn z.B. der Arm 172 mit dem Arm 176 "zusammengeklappt" werden kann und der Sensor 200 an einer geeigneten Stelle dem Arm 176 entlang plaziert werden kann. Vorzugsweise tastet der Sensor 200 den Arm 172 berührungslos ab z.B. optisch, magnetisch, elektromagnetisch oder sogar pneumatisch. Im Prinzip könnte aber auch die Referenzierung durch eine Berührung zwischen dem zu bewegenden Teil und dem Referenzsensor z.B. Endschalter erfolgen. Trotz aller dieser Möglichkeiten wird es nicht immer möglich bzw. sinnvoll sein, die "ideale" Stelle des zu bewegenden Teiles abzutasten und verschiedene andere Möglichkeiten werden nun anhand von den praktischen Beispielen der Figuren 1, 4 und 5 erläutert werden.

Figur 1 zeigt zwei Endschalter, 300 und 302, welche die jeweiligen Endstellen des Bewegungsraumes für den Schlitten 186 festlegen. Einer von diesen Endstellen dient als Referenzpunkt, wovon ausgehend alle Bewegungen des Schlittens 186 berechnet werden können. Dieses Beispiel zeigt aber gleichzeitig, dass ein zweiter Referenzpunkt für die Bewegungen eines einzelnen Teiles vom System bestimmt werden kann. In einem einfachen Beispiel könnte der untere Endschalter 302 als Referenzpunkt für alle Bewegungen betrachtet werden und der obere Endschalter 300 als Alarm ausgenützt werden, um die Bewegung des Schlittens 180 in Richtung nach oben zu begrenzen. Die Anordnung kann aber auch zur Anpassung des Roboters an die Gegebenheiten der zu bedienenden Maschine ausgenützt werden.

Ringspinnmaschinen sind nämlich zur Bildung von Garnpakkungen (Köpse) von verschiedenen Längen (normalerweise zwischen 180 und 250 mm) ausgelegt. Da die vom Bedienungsroboter verlangten Bedienungsoperationen zum Teil von der Packungs- bzw. Hülsenlänge abhängig sind, müssen die zutreffenden Daten im Haupt- bzw. Koordinationsprozessor MP eingetragen werden. Dies kann dadurch erfolgen, dass die Stelle der Endschalter 302 gegenüber der Stelle vom Endschalter 300 in Abhängigkeit von der Hülsenlänge auf der zu bedienenden Ringspinnmaschine einstellbar ist. Der Bedienungsroboter ist dann jedesmal beim neuen Ingangsetzen in der Lage, die notwendigen Informationen über die Hülsenlänge selbst zu erforschen, indem der Schlitten 180 vorerst vom Hauptprozessor MP über den Regler (nicht gezeigt) für seinen Antriebsmotor ME den Referenzschalter 300 auszusuchen hat und nachher den zweiten Endschalter 302. Beim Auffinden des zweiten Schalters kann der Hauptprozessor MP seine Position gegenüber dem Referenzpunkt durch Abfragen der Positionsdaten in der Ist-Werteinheit D (Figur 2) vom jeweiligen Regler ablesen und im eigenen Speicher eintragen. Falls die Ist-Wertdaten nicht beim Referenzpunkt auf Null gesetzt werden müssen, ist es sogar nicht notwendig, vorerst den Referenzpunkt auszusuchen, sondern es können bloss die Positionsdaten für beide Endschalter im Hauptprozessor nacheinander eingetragen werden.

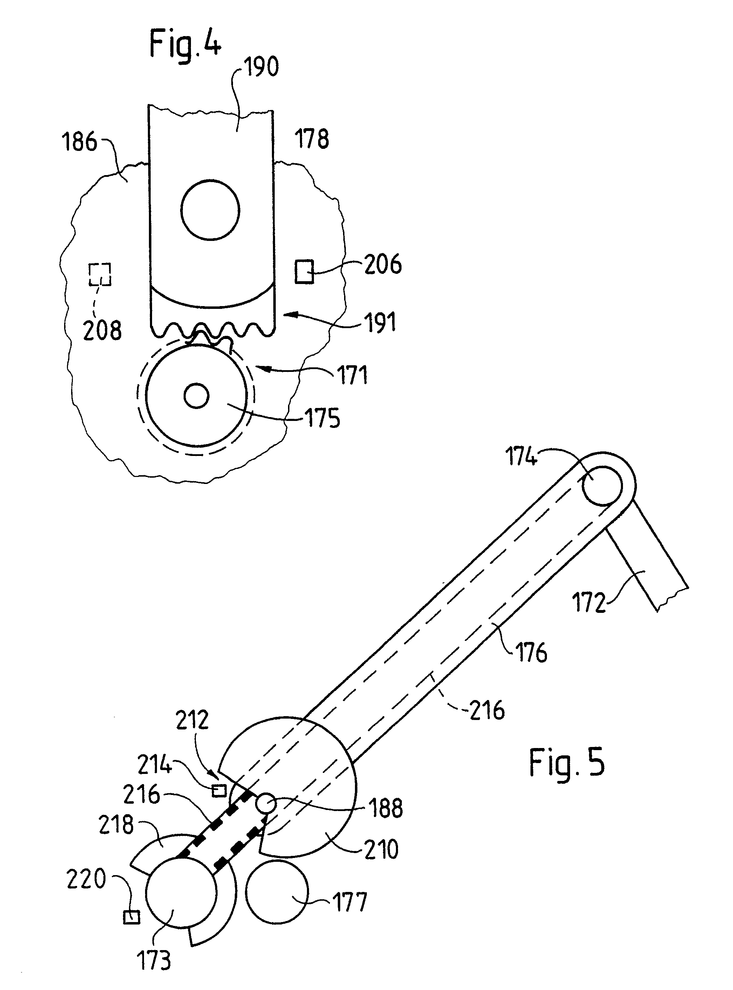

Figur 4 zeigt eine geeignete Anordnung für den Träger 190, der um die vom Schlitten 186 getragene Schwenkachse 178 drehbar ist. Die Drehbewegung wird von Motor 175 z.B. über einen Zahnkranz 171 auf der Motorwelle und einem Zahnsegment 191 auf dem Träger 190 bewegt. Ein Referenzsensor 206 kann dann auf dem Schlitten 186 montiert werden, sodass sich der Träger 190 dem Sensor 206 im Lauf von seiner Bewegung in eine Drehrichtung annähern muss. Ein zweiter Sensor 208 kann auf die andere Seite vom Träger 190 auf dem Schlitten 186 montiert werden, um eine Funktion ähnlich derjenigen des Sensors 204 in Figur 1 auszuüben. Die Drehbewegung des Trägers 190 um die Schwenkachse 178 ermöglicht die Zustellung des Fadenmanipulators aus beiden Drehrichtungen (von "links" bzw. von "rechts") an eine ausgewählte Spinnstelle. Ueber die Einstellung des Abstandes zwischen den Sensoren 206, 208 von einem Sensorenpaar könnte der Drehbereich des Trägers 190 an die Teilung der Spinnstellen der zu bedienenden Maschine angepasst werden.

Figur 5 zeigt weitere Einzelheiten des Fadenmanipulators 124, bestehend aus den Armen 176 und 172. Es wird hier angenommen, dass der Antriebsmotor 177 für den Arm 176 mit einem Zahnkranz (nicht gezeigt) versehen ist, der mit einem Zahnsegment 210 auf dem Arm 176 kämmt, um die Drehungen der Motorwelle auf dem Arm 176 zu übertragen. Da der Arm 176 nur Schwenkbewegungen und keine volle Umdrehung um seine Schwenkachse 188 ausführen darf, hat das Zahnsegment 210 eine Lücke 212. Der Referenzsensor 214 für Arm 176 ist auf dem Träger 190 montiert und in diese Lücke 212 plaziert. An einem Ende der Schwenkbewegungen vom Arm 176 tritt eine Stirnseite des Segmentes 210 in das Messfeld vom Sensor 214 ein.

Der Antriebsmotor 173 für den Arm 172 ist auf dem Träger 190 montiert und die Welle (nicht gezeigt) dieses Motors ist mit dem Arm 172 über einen Synchronriemen 216 verbunden. Zu diesem Zweck kann der Arm 176 als Hohlkörper gebildet werden, wobei der Riemen 216 im Inneren des Armes 176 vom Motor 173 zum Arm 172 geführt wird. Die Welle (nicht gezeigt) des Motors 173 wird auch mit einem Segment 218 derart gekoppelt, dass die Stellung des Segments um die Drehachse des Motors eine feste Beziehung zur Stellung des Armes 172 um seine Drehachse 174 aufweist. Ein allfälliges Getriebe muss daher zwischen der Motorwelle und dem Segment bzw. Synchromriemen vorgesehen werden. Es ist daher möglich, einen Referenzsensor 220 für den Arm 172 gegenüber dem Segment 218 zu stellen, sodass die Referenzierung des Armes 172 im wesentlichen gleich der Referenzierung des Armes 176 ablaufen kann.

Der Referenzpunkt ist mit Vorteil in einem Endbereich des Bewegungsraumes seines jeweiligen Teiles plaziert, da diese Plazierung das Aufsuchen des Referenzsensors beim Referenzieren vereinfacht. Vorausgesetzt aber, dass der Hauptprozessor beim Wiedeingangsetzen in der Lage ist, durch Bewegung des Teiles den zutreffenden Referenzsensor zu finden, ist es nicht notwendig, diesen Sensor im Endbereich des jeweiligen Bewegungsraumes zu montieren. Wenn z.B. beim Stillsetzen des Systems ein Teil sich immer auf einer vorbestimmten Weise verhält, (beispielsweise unter die Schwerkraft nach unten fällt), kann die Suchbewegung von diesem bekannten Sektor des Bewegungsraumes in Richtung eines Referenzpunktes z.B. im Mittelbereich des Raumes erfolgen.

Die Erfindung ist nicht auf die Anwendung des Hawlett-Packard HCTL - 1000 Regelprozessor eingeschränkt. Der Prozessortyp und der Ist-Wertgeber müssen einander angepasst werden. Für die Anwendung in Bedienungsrobotern für Spinnmaschinen sind Ist-Wertgeber mit Impulszahlen zwischen 800 und 2000 pro Umdrehung gut geeignet, obwohl die Erfindung auch nicht auf diese Typen eingeschränkt ist. Die Taktfrequenz des Ausgangssignales vom Ist-Wertgeber ist auf jeden Fall vorzugsweise hoch genug gegenüber der Taktfrequenz vom Arbeitszyklus des Regelprozessors anzusetzen, um Schluss- folgerungen auf die Drehzahl anhand einer Auswertung des Ist-Wertgebersignals zu ermöglichen.

Die Erfindung ist auch nicht auf die feste Verbindung des Ist-Wertgebers mit der Motorenwelle eingeschränkt. Wo die Anordnung dies ermöglicht bzw. wegen unzulässiger Störfaktoren in der Verbindung zwischen dem Motor und dem zu bewegenden Teil, kann der Ist-Wertgeber direkt mit dem Teil verbunden werden, um unmittelbar auf seine Bewegungen zu reagieren. Dies führt aber normalerweise zu Komplikationen in der Signalübertragung und ist wo immer möglich zu vermeiden.

Jeder regelbare Motor kann zur Anwendung in einem System gemäss dem zweiten Aspekt dieser Erfindung eingesetzt werden. Beispiele sind Gleichstrommotoren konventioneller Bauart, Schrittmotoren und frequenzgesteuerte Drehstrommotoren. Auch hydraulische und pneumatische Motoren könnten im Prinzip hier verwendet werden.

Nach dem ersten Aspekt der Erfindung sind aber in einem Bedienungsroboter für die Textilmaschinenindustrie die bewegbaren Teile vom Roboter und sogar der Roboter selber von bürstenloser Gleichstrommotoren angetrieben. Ein Motor dieser Bauart ist normalerweise mit Sensoren versehen, welche auf die momentane Winkelstellung des Rotors reagieren, sodass der elektromagnetische Zustand der Felderwicklungen im Stator in Abhängigkeit von dieser Winkelstellung gesteuert werden kann (elektronische Kommutierung). Es kommen normalerweise sogenannte Hallsensoren zur Anwendung.

Es wird aber jetzt klar sein, dass ein mit einem Encoder E (Figur 2) versehene bürstenlose Gleichstrommotor keine Hallsensoren braucht, um die Winkelstellung von seinem Rotor (seine Motorwelle) festzustellen. Die Ausgangssignale vom Encoder enthalten diese Information, vorausgesetzt aber, dass der Encoder selber mit einer Indexierung versehen ist, um eine "Grundstelle" des Rotors zu markieren. Eine Zusatzleitung EZ zum Weiterleiten eines solchen Indexierungssignales an die Kommutierungseinheit K des Regelprozessors H ist in Figur 2 angedeutet. Es wird hier betont, dass eine solche Indexierung für den vorher beschriebenen zweiten Aspekt dieser Erfindung nicht ausreicht, da sie nur die Position der Motorwelle gegenüber dem Feldsystem des Motors angibt und keinerlei Informationen über die Position des zu bewegenden Teiles im Raum enthält. Die direkte Kombination des Encoders mit der Motorwelle bringt aber die Möglichkeit der Kombination sowohl der Lageregelung des zu bewegenden Teiles als auch der elektronischen Kommutierung von der bevorzugten Motorart.

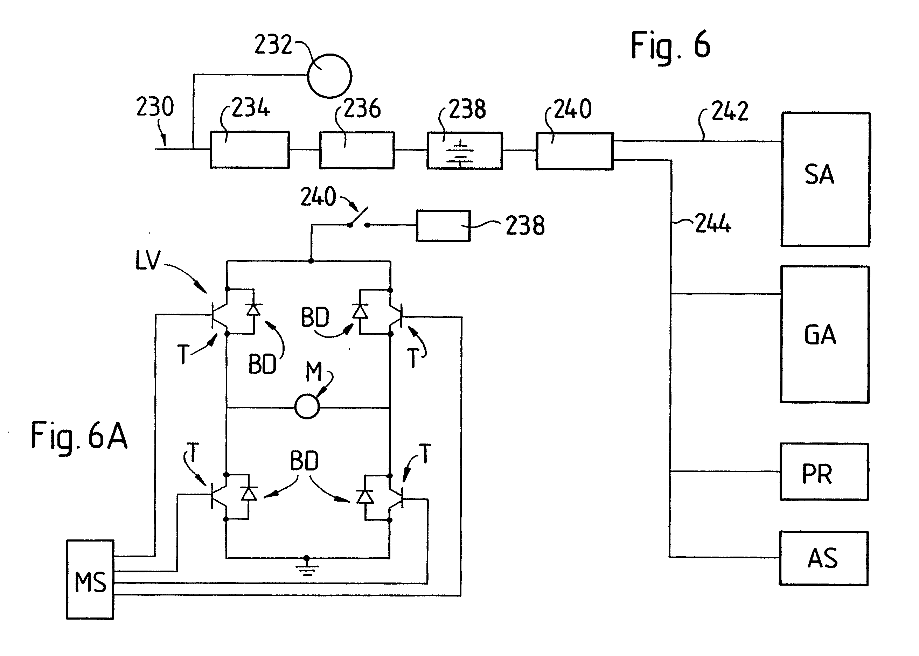

Figur 6 zeigt nun eine bevorzugte Anordnung zur Speisung der verschiedenen Gleichstromantriebe eines Bedienungsroboters mit Energie. Es wird hier angenommen, dass der Roboter an einem Eingang 230 Wechselstromenergie mit einer geeigneten Spannung erhält z.B. von einer Stromschiene. Diese Energie kann direkt zum Antrieb z.B. von einem Kompressor 232 angewendet werden. Zur Speisung der Gleichstromantriebe ist ein Gleichrichter 234 notwendig, welcher vorzugsweise über ein Ladegerät 236 eine Batterie 238 auflädt. Die Batterie ist über einen Schalter 240 mit den verschiedenen gleichstromverbrauchenden Elementen des Roboters verbunden. Auf eine erste Leitung 242 kann z.B. Gleichstrom mit einer ersten Spannung an die verschiedenen Servo-Antriebe SA (mit den Motoren 173, 175, 177 und 199) gespiesen werden. Ueber eine zweite Leitung 244 können andere Gleichstromantriebe GA und/oder die Prozessoren PR und/oder ein Anzeigesystem AS gespiesen werden.

Diese Anordnung hat zwei grosse Vorteile. Das Netz (nicht gezeigt), welches Energie an den Eingang 230 liefert, muss nur die durchschnittliche Energie über Zeit liefern. Spitzenwerte können über eine kürzere Periode aus der Ladung der Batterie 238 entnommen werden und später während einer Periode von relativ niedrigem Energieverbrauch wieder ersetzt werden. Ferner ermöglicht die direkte Verbindung der verschiedenen Antriebe mit der Batterie 238 die Rückspeisung von Energie aus den Motoren, wenn die letzteren generatorisch angetrieben werden, d.h. wenn die bewegbaren Teile des Roboters bzw. vom Roboter selber elektrisch gebremst werden. Figur 6A zeigt einen Leistungsverstärker LV mit Schalttransistoren T und Bypassdioden BD, welche diese Rückspeisung aus einem Motor M ermöglichen.

Das Vorsehen einer Batterie zur Unterstützung des Energiesystems vom Roboter hat zwei weitere Vorteile. Wegen der Batterieunterstützung des Prozessorssystems gehen gespeicherte Informationen bei einem unvorhergesehenen Netzausfall nicht verloren. Beim gleichen Ereignis sind die verschiedenen Antriebe nicht plötzlich stromlos gesetzt worden, sondern sie können mindestens kurzfristig von der Batterie her weitergetrieben werden. Beim Feststellen eines Netzausfalles ist die Robotersteuerung daher in der Lage, mindestens eine einmal begonnene Bedienungsoperation vollständig auszuführen und den Bedienungsroboter in einen sicheren Zustand zu stellen, bevor das System bei verlängertem Netzausfall abgestellt werden muss.

Die Erfindung in ihrem ersten Aspekt ist aber nicht auf die Anwendung im Netz (Stromschiene) eingebundene Systeme eingeschränkt. Es ist natürlich bekannt, sowohl in der Textilindustrie als auch in der metallverarbeitenden Industrie Batterien als Energiequelle für Flurförderfahrzeuge ohne Netzverbindung zu verwenden. Die Batterie eines Fahrzeuges kann entweder periodisch ausgewechselt werden oder im Fahrzeug selber periodisch aufgeladen werden. Auch in solchen Fällen ist der bürstenlose Gleichstrommotor bestens geeignet als Antriebsmotor sowohl für das Fahrzeug selber als auch für allfällige vom Fahrzeug mitgetragene Bedienungselemente z.B. Greifer, Drehteller und Lenksysteme mit oder ohne Lageregelung. Ein Beispiel für ein solches Fahrzeug in der Textilindustrie ist ein Kannentransportfahrzeug zum Transportieren von Spinnkannen zwischen faserverarbeitenden Maschinen einer Spinnerei, beispielsweise zwischen Karde und Strecke, Strecke und Strecke, Strecke und RotorSpinnmaschine oder Strecke und Flyer.

Objekt 774, welches im ersten Absatz dieser Anmeldung erwähnt ist, wurde am 14. April 1989 als schweizerische Anmeldung Nr. 1385/88 eingereicht. Aequivalente sind in den U.S.A. (S.N. 336,160 vom 11. April 1989), Japan (1-91976 vom 1. April 1989) und Europa (Nr. 89106261.4 vom 8. April 1989) eingereicht worden.

**Ansprüche**

1. Ein Bedienungsroboter mit einem lagegeregelten Motor, dadurch gekennzeichnet, dass der Ist-Wertgeber für das Lageregelungssystem auf Bewegungen ohne Bezug auf einen vorbestimmten Referenzpunkt für den zu bewegenden Teil reagiert und dass separat Mittel vorgesehen sind um mindestens einen Referenzpunkt für den zu bewegenden Teil zu bestimmen.

2. Bedienungsroboter nach Anspruch 1, dadurch gekennzeichnet, dass die Motorwelle mit einem Encoder versehen ist, der eine vorbestimmte Anzahl elektrische Impulse pro Umdrehung der Welle erzeugt.

3. Ein Bedienungsroboter nach Anspruch 1 oder 2, dadurch gekennzeichnet, dass die Lageregulierung einen Punkt-zu-Punkt-Regler umfasst.

4. Ein Bedienungsroboter nach einem der vorangehenden Ansprüche, dadurch gekennzeichnet, dass das Mittel zur Bestimmung von einem Referenzpunkt für den zu bewegenden Teil derart zur Zusammenarbeit mit einem Prozessor angeordnet ist, dass der Prozessor jederzeit imstande ist, an die Lageregulierung Fahraufträge, ausgehend von einem im wesentlichen bekannten Zustand des zu bewegenden Teiles, zu erteilen.

5. Bedienungsroboter nach Anspruch 4, dadurch gekennzeichnet, dass der Prozessor jederzeit imstande ist, den zu bewegenden Teil an den bzw. einen Referenzpunkt über die Lageregulierung anfahren zu lassen.

6. Ein Bedienungsroboter nach Anspruch 4 oder 5, dadurch gekennzeichnet, dass der Prozessor zur Steuerung von mehreren Lageregulierungen angeordnet ist und daher die Bewegungen von verschiedenen Teilen des Roboters koordinieren kann.

7. Ein Bedienungsroboter nach einem der vorangehenden Ansprüche, dadurch gekennzeichnet, dass das Mittel zur Bestimmung eines Referenzpunktes eine Vorrichtung umfasst, die auf den Zustand des zu bewegenden Teiles reagieren und ein entsprechendes Signal erzeugen kann.

8. Bedienungsroboter nach Anspruch 7, dadurch gekennzeichnet, dass die Vorrichtung durch einen Sensor gebildet wird, der ein vorbestimmtes Tastfeld hat und auf das Eindringen des Teils in dieses Feld reagiert.

9. Ein Bedienungsroboter nach Anspruch 8, dadurch gekennzeichnet, dass der Sensor gegenüber dem Bewegungsraum des Teiles derart plaziert wird, dass sein Tastfeld einen Endbereich dieses Bewegungsraumes überdeckt.

10. Ein Bedienungsroboter nach einem der vorangehenden Ansprüche, dadurch gekennzeichnet, dass Mittel zum Feststellen des Zustandes der Lageregulierung als einen Referenzzustand vorgesehen sind, wenn der zu bewegende Teil an einem Referenzpunkt steht.

11. Steuerbares Bewegungssystem für einen bewegbaren Teil eines Bedienungsroboters, gekennzeichnet durch einen lagegeregelten Motor zum Bewegen des Teiles, ohne dass die Lageregulierung selber Daten enthält über die Position des Teiles gegenüber seinem Bewegungsraum und Steuerungsmittel, welche die Lageregulierung steuern, um den Teil vorerst an einen vorbestimmten Referenzpunkt zu bewegen und den Zustand der Lageregulierung als Referenzzustand zu vermerken.

# Fig. 1

# Fig. 1A

# Fig. 1B

Fig.2

EP 0 421 152 A1

# Fig. 3

```
        ┌─────────────┐
        │  Ref.       │
        │  suchen     │
        └──────┬──────┘
               │ ja
        ┌──────▼──────┐
        │   Eilgang   │
        └──────┬──────┘
               │
        ┌──────▼──────┐     nein
        │   Ref.      ├─────────┐
        │  erreicht   │         │
        └──────┬──────┘◄────────┘
               │ ja
        ┌──────▼──────┐
        │   Stoppen   │
        └──────┬──────┘
               │
        ┌──────▼──────┐
        │  Kriechgang │
        └──────┬──────┘
               │
        ┌──────▼──────┐     nein
        │   Ref.      ├─────────┐
        │  erreicht   │         │
        └──────┬──────┘◄────────┘
               │ ja
        ┌──────▼──────┐
        │ Stoppen und │
        │Ref. einstellen│
        └─────────────┘
```

## Fig.4

## Fig. 5

Fig. 6

Fig. 6A

### Europäisches Patentamt

# EUROPÄISCHER RECHERCHENBERICHT

Nummer der Anmeldung

## EP 90 11 7420

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-3 717 803 (ZINSER)<br>– – – – – | | D 01<br>H 15/013 |
| | | | **RECHERCHIERTE SACHGEBIETE (Int. Cl.5)**<br><br>D 01 H<br>B 65 H |

Der vorliegende Recherchenbericht wurde für alle Patentansprüche erstellt

| Recherchenort | Abschlußdatum der Recherche | Prüfer |
|---|---|---|
| Den Haag | 10 Januar 91 | RAYBOULD B.D.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument